# EUROPÄISCHE PATENTSCHRIFT

(11) **EP 1 019 732 B1**
(45) Veröffentlichungstag und Bekanntmachung des Hinweises auf die Patenterteilung: **29.10.2003**
(21) Anmeldenummer: 99940103.7
(22) Anmeldetag: 30.07.1999
(51) Int. Cl.: G01N 35/02

(54) **EINRICHTUNG ZUM TRANSPORT UND ZUR HANDHABUNG VON MIKROTITERPLATTEN**
DEVICE FOR TRANSPORTING AND HANDLING MICROTITER PLATES
DISPOSITIF DE TRANSPORT ET DE MANIPULATION DE PLAQUETTES DE MICROTITRAGE

(30) Priorität: 04.08.1998 DE 19835071
(43) Veröffentlichungstag der Anmeldung: 19.07.2000
(73) Patentinhaber: CARL ZEISS JENA GmbH, 07745 Jena (DE); F. HOFFMANN-LA ROCHE AG, 4070 Basel (CH)
(72) Erfinder: AMELING, Richard, D-73434 Aalen (DE); ENDERLE, Thilo, D-79618 Rheinfelden (DE); FATTINGER, Christof, CH-4223 Blauen (CH); GLUCH, Martin, D-07743 Jena (DE); TSCHIRKY, Hansjörg, CH-4107 Ettingen (CH)
(74) Vertreter: Niestroy, Manfred
(86) Internationale Anmeldenummer: EP9905542
(87) Internationale Veröffentlichungsnummer: WO00008473

(56) Entgegenhaltungen:
- EP-A- 0 809 112
- EP-A- 0 915 341
- WO-A-97/22882
- WO-A-98/26295
- WO-A-98/52047
- PLUNKETT, M.J. ET AL: "Neue Wirkstoffe durch kombinatorische Chemie" SPEKTRUM DER WISSENSCHAFTEN, SPEZIAL 6: PHARMAFORSCHUNG,1997, Seiten 28-35, XP002122104 Heidelberg, DE, ISSN 0943-7096 in der Anmeldung erwähnt

## Beschreibung

### Gebiet der Erfindung

Die Erfindung bezieht sich auf eine Einrichtung zum Transport und zur Handhabung von Mikrotiterplatten, wobei als Mikrotiterplatten standardisierte Träger von Proben verstanden werden, die bei der Entwicklung von pharmazeutischen Wirkstoffen, in der medizinischen Diagnostik oder ähnlich zu untersuchen und/oder zu bearbeiten sind.

### Stand der Technik:

Der Stand der Technik auf diesem Gebiet ist im wesentlichen dargelegt in folgenden Veröffentlichungen:
1. "Accelerating Drug Discovery Process with Automation and Robotics in High Troughput Screening" Editor: John P. Delvin; 1997 Marcel Dekker Inc; ISBN 0-8247-0067-8
2. Beispiele in "Laboratory Automation News" Editor Robin A. Felder Health, Sciences Center Charlottesville VA 22908
3. "Microplate Standardization Report 3" in Journal of Biomolecular Screening Vol 1 N4, 1996
4. "Spektrum der Wissenschaft Spezial Nr.6"; Pharmaforschung 1997; Spektrum der Wissenschaft Verlagsgesellschaft mbH, Heidelberg, ISSN 0943-7096...
5. "Industrieroboter"; Kreuzer/Lugtenburg/Meißner/ Trukkenbrodt 1994; Springer Verlag ISBN 3-540-54630-8

In der nachfolgenden Beschreibung werden Abkürzungen mit folgender Bedeutung verwendet:
- HTS High Throughput Screening
- MTP Mikrotiterplatte
- SPS Speicherprogrammierbare Steuerung

Die Analyse einer Vielzahl von Proben ist eine stets wiederkehrende Aufgabe sowohl in der pharmazeutischen Wirkstoffentwicklung als auch in der medizinischen Diagnostik.

Die Entwicklung eines neuen pharmazeutischen Wirkstoffes ist ein Prozeß, der sich über mehrere Jahre erstreckt und hohe Kosten verursacht. Dabei wird für eine Zielstruktur (Target) ein geeigneter pharmakogener Stoff gesucht (vgl. Veröffentlichung 4. zum Stand der Technik). Mit Hilfe einer geeigneten biochemischen Nachweisreaktion (Assay) lassen sich Reaktionen zwischen Targets und geeigneten Bindungspartnern quantitativ nachweisen.

In der pharmazeutischen Industrie existieren derzeit Bibliotheken von Wirkstoffen mit einem Umfang von 300.000 bis zu 1.000.000 verschiedener Reinsubstanzen. Mit jedem neuen Target steht die Aufgabe, aus dieser Substanzmenge mit einem geeigneten Assay Bindungspartner zu identifizieren. Man bezeichnet diesen Prozeß als High Throughput Screening (HTS; "Suchen mit großem Probendurchsatz"). Das Ergebnis eines solchen Screenings ist eine kleine Anzahl von Substanzen (typischerweise 0,5% bis 1% der Gesamtzahl), die eine positive Reaktion im Assay zeigen. Diese Leitstrukturen stellen die Grundlage für die weitere Entwicklung eines Medikaments dar.

In der medizinischen Diagnostik ergeben sich ähnliche Probleme, wenn bei der Analyse von vielen Einzelproben (in diesem Falle meist Proben aus Blut, Urin, etc.) anhand standardisierter Nachweisreaktionen Infektionen, Erkrankungen, genetischen Dispositionen und ähnlich nachgewiesen werden sollen. Beispiele sind das Screenen von Spenderblut in Blutbanken nach Infektionen und Routineuntersuchungen bei Risikogruppen auf Infektionen oder andere Krankheitssymptome.

Ein weiteres Anwendungsfeld im biochemischen Umfeld ist die kombinatorische Chemie. Hier werden durch Parallelsynthese mehrere hundert verschiedene Einzelsubstanzen gleichzeitig erzeugt, die nachfolgend mittels geeigneter Techniken bearbeitet und charakterisiert werden müssen.

Zur parallelen Bearbeitung großer Probenmengen hat sich ein Probenträgerstandard entwickelt: Mikrotiterplatten (MTP) mit standardisierten Abmessungen und Lochraster für 96, 384, 1536 (vgl. Veröffentlichung 3. zum Stand der Technik) . Diese Anordnung erlaubt die parallele Bearbeitung von vielen Einzelproben. Die Analyse solcher MTP erfolgt durch automatisierte Abarbeitung eines Assayprotokolls. Ein solches Protokoll umfaßt eine festgelegte Anzahl von Bearbeitungsschritten; dazu gehört z.B. das Lösen und Mischen von Substanzen, Inkubieren für eine festgesetzte Zeit sowie die Bestimmung von Meßwerten mittels eines geeigneten Analysengerätes. Zu diesem Zweck gibt es automatisierte Probenverarbeitungsgeräte (vgl. Veröffentlichung 2. zum Stand der Technik) zum Lösen von Feststoffen, pipettieren, mischen, inkubieren, messen.

Typische HTS-Systeme sind Laborgeräte, die durch ein zentrales Handlingsystem miteinander verbunden sind. Ein solches Handlingsystem besteht im wesentlichen aus einem Roboter mit Greifer für MTP, der entweder in einer Kreisbewegung (Dreh-Schub-Arm) oder bewegt auf einer Geraden die Platten zwischen den einzelnen Stationen befördert.

Die Abarbeitung der einzelnen Arbeitsschritte wird über eine Softwaresteuerung (Scheduler) geregelt, die die Abfolge der Prozeßschritte hinsichtlich bestehender Randbedingungen optimiert (z.B.: Platte darf nur an eine freie Position übergeben werden; feste zeitliche Intervalle zwischen aufeinanderfolgenden Prozeßschritten müssen eingehalten werden usw.).

Die Leistungsfähigkeit solcher Handlingsysteme ist eingeschränkt, denn der Roboterarm steht in den meisten Fällen nicht an der Position, an der die nächste Operation vorgenommen werden soll. Die Zeitdauer, die erforderlich ist, um dorthin zu gelangen hängt von der letzten ausgeführten Operation ab und ist somit nicht immer gleich.

Ein Roboterarm braucht drei Bewegungen, um zwei Platten um je eine Position weiterzubefördern. Die oben genannte Beschränkung muß von der Software, die das Gesamtsystem steuert, berücksichtigt werden.

Die lineare Verknüpfung der Prozeßschritte erfordert, daß die Randbedingung "feste Zeitintervalle" zwischen zwei Bearbeitungsschritten für alle Operationen eingehalten werden muß.

Beim Rundtakter (Dreh-Schub-Arm) sind Zahl und Größe der am Prozeß beteiligten Komponenten begrenzt, dafür sind die Wege kurz. Bei der Bewegung auf einer Geraden dagegen werden mit zunehmender Länge die Totzeiten, in denen sich der Arm zur nächsten Position bewegt, immer größer.

Die Steuerung eines solchen Systems wird vom Scheduler koordiniert, einem Programm, das die zeitliche Abfolge der Steuerungskommandos so berechnet, daß jede MTP die gleiche Behandlung (Prozeßschritte und Prozeßdauer) erfährt. Es gibt zwei Ausführungen von Schedulern.

Statische Scheduler: Hier wird die zeitliche Abfolge der Steuerungskommandos vor Prozeßbeginn berechnet und im Lauf nicht mehr modifiziert.

Dynamische Scheduler: Hier wird die zeitliche Abfolge der Steuerungskommandos vor Prozeßbeginn berechnet und im Lauf bei Abweichungen eine Neuberechnung vorgenommen.

Dynamische Scheduler können auf Veränderungen reagieren, die sich durch kleine Störungen oder Schwankungen im Prozeß ergeben, mitunter jedoch auf Kosten der Gleichbehandlung aller Platten. Beide Typen von Schedulern haben sehr komplexe Optimierungen zu vollziehen, die sich aus den oben genannten Randbedingungen der Transportsysteme, wie sie derzeit in HTS eingesetzt werden, ergeben.

In WO 98/26295 ist ein Transportsystem für Mikrotiterplatten beschrieben, das für den Einsatz in der Diagnostik bestimmt ist. Dieses Transportsystem besteht aus einzelnen Modulen, die beispielsweise der Vorbereitung der Proben und dem Auslesen der Mikrotiterplatten dienen. Dabei werden die Mikrotiterplatten nach einem vorgegebenen Zeitregime von Modul zu Modul transportiert. Da die Prozesszeiten für das Vorbereiten bzw. Auslesen der Proben bei den einzelnen Modulen verschieden sein können, lassen sich in Gesamtablauf Totzeiten für einzelne Mikrotiterplatten nicht vermeiden.

Aus WO 98/52047 ist ein automatisiertes System und ein Verfahren zur schnellen Überprüfung und Identifizierung von chemischen Proben bekannt, bei dem die Erhöhung des Probendurchsatzes durch Parallelisierung von Prozeßabläufen vorgesehen ist. Ist beim Betreiben des Systems für bestimmte Probenvorbereitungs- oder Analyseschritte ein höherer Durchsatz erforderlich, um Engpässe bzw. Staubildung zu vermeiden, wird die Anzahl der in Betrieb genommenen Arbeitsstationen erweitert. So ist es z. B. möglich, zusätzliche Pipettierer zu aktivieren, um die Kapazität der Anlage bzw. den Durchsatz an Proben je Zeiteinheit zu erhöhen.

### Beschreibung der Erfindung

Aufgabe der Erfindung ist es, ein Transportsystem der eingangs genannten Art zu schaffen, das die vorbeschriebenen Einschränkungen überwindet.

Der lineare Prozeßablauf ist erfindungsgemäß in Teilschritte untergliedert, die in autonomen Bearbeitungseinheiten (Modulen), die jeweils ein eigenständiges Transportsystem besitzen, bearbeitet werden.

Alle Bearbeitungsschritte eines Prozesses, die eine feste zeitliche Beziehung untereinander erfordern, wie die genaue Einhaltung einer Inkubationszeit, sind auf einem solchen Modul zusammengefaßt.

Der Transport zwischen Bearbeitungsplätzen innerhalb eines Modules erfolgt synchron; die vom jeweiligen Prozeßablauf abhängige Reihenfolge der Bearbeitungen ist frei definierbar. Jedes Modul besitzt einen Puffer für eingehende und ausgehende Platten. Alle Module haben eine gemeinsame standardisierte Schnittstelle.

Der Transport zwischen den Modulen erfolgt asynchron mit einem separaten Transportsystem zwischen Ausgangs- und Eingangspuffer aufeinanderfolgender Module. Die Reihenfolge des Plattentransportes ist frei definierbar. Die Steuerung eines Moduls erfolgt über eine lokale Steuereinheit.

Die einzelnen Modul-Steuerungen sind über ein standardisiertes Netzwerk (Ethernet, Feldbus oder künftige Weiterentwicklungen) mit entsprechendem Protokoll (TCP/IP, CAN oder künftige Weiterentwicklungen) miteinander verbunden.

Ein Leitrechner übernimmt die Kontrolle über das gesamte System (Client Server Architectur).

Das Transportsystem zwischen den Modulen kann realisiert werden mit:
- einem linearen Transportsystem mit Greifer;
- einem Dreh-Schub-Arm mit Greifer und entsprechender Anordnung der Module (vgl. Veröffentlichung 5. zum Stand der Technik);
- einem Förderband mit Stoppern und Ein/Ausschleusungen für die Platten an den Modulen.

Das Transportsystem innerhalb der Module kann realisiert werden mit einem Förderband mit Transfersystemen zu den einzelnen Komponenten auf dem Modul. Für den Transfer ergeben sich folgende Möglichkeiten:
- mittels Greifern als "pick and place"-Operationen;
- durch Stopper auf dem Band in Verbindung mit Ein- und Ausschiebern zwischen Transportsystem und den einzelnen Komponenten;
- Drehtellern mit je 2 Aufnahmen für MTP's, zwischen denen die Platten bewegt werden;
- einem Knickarmroboter (vgl. Veröffentlichung 5. zum Stand der Technik), in dessen Reichweite die einzelnen Komponenten sich befinden.

Die Steuerung eines Moduls kann realisiert werden mit:
- Speicherprogrammierbarer Steuerung (SPS) wie z.B. Siemens S5
- Industrie PC mit Steckplätzen
- Mikrocontroller mit Peripheribausteinen (PLC= Programmable Logic Controller).

Die Steuerung des Gesamtsystems kann beispielhaft realisiert werden mit:
- Speicherprogrammierbarer Steuerung (SPS) wie z.B. Siemens S5 oder auch
- Industrie PC mit Steckplätzen.

### Kurze Beschreibung der Zeichnungen

- Fig.1: Darstellung der Kommunikation via Ethernet mittels TCP/IP
- Fig.2: das Prinzip des synchronen/asynchronen Plattentransportes
- Fig.3: das erfindungsgemäße Gesamtsystem
- Fig.4: Übernahme oder Übergabe von Mikrotiterplatten an/vom Transportsystem

### Ausführliche Beschreibung der Zeichnungen

Ein Ausführungsbeispiel für die Steuerung wäre die Anordnung von Modulsteuerungen und dem Leitrechner in einer Client Server Architectur. Die Steuerungseinheiten bestehen aus PC-Computern, die untereinander durch Ethernet verbunden sind. Als Betriebssystem wird z.B. Windows NT verwendet, die Kommunikation via Ethernet wird mittels TCP/IP realisiert.

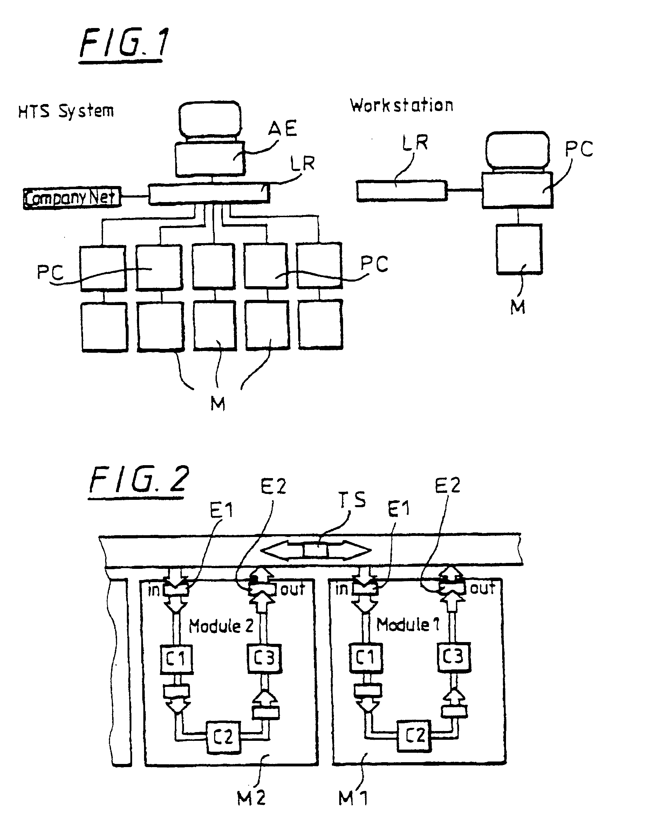

Dies ist in Fig.1 dargestellt. Jedes Modul M weist einen Lokalrechner PC auf, wobei alle Lokalrechner dieselbe Schnittstelle haben und über die Module M mit einem Leitrechner LR verbunden sind. Die innerhalb des Moduls M unterschiedliche Hardware wird über den Lokalrechner PC gesteuert, wobei der Leitrechner LR über die einheitlichen Schnittstellen Zugriff auf die jeweils im Modul M betriebene Hardware hat und diese über eine Ansteuereinheit AE ansteuert.

Vorteile der oben genannten Ausführung: Die zeitkritischen Prozeßschritte sind in die Module M gekapselt, die über Puffer Mikrotiterplatten empfangen und weitergeben. Die Puffer erlauben es, daß bei der Steuerung des Plattenflusses nicht alle Prozeßschritte synchronisiert werden müssen, sondern nur die Prozesse, die innerhalb eines Moduls M stattfinden.

Die Module M sind autonome Funktionseinheiten, die Teilschritte eines Prozesses bearbeiten können. Sie können alleine ohne das Gesamtsystem mit einer geeigneten Steuerung betrieben werden. Im Alleinbetrieb erfolgt die Zu- und Abführung der Mikrotiterplatten entweder über die Pufferplätze oder mit zusätzlichen Plattenspeichern (Stackern), die mehrere Mikrotiterplatten aufnehmen und abgeben können.

Die Module M haben eine geringere Komplexität als das gesamte System. Das erleichtert die Wartung und Integration von neuer Hardware und auch das Testen von neuen Prozessen. Wenn das Modul M funktioniert, so ist die Einbindung in das Gesamtsystem aufgrund der standardisierten Schnittstelle gewährleistet.

Das gesamte System ist skalierbar. Module M können hinzugefügt oder weggenommen werden. Ein Bandsystem als zentrales Transportmittel läßt sich weiter verlängern. Die Leistungsfähigkeit läßt sich durch Parallelschaltung von Modulen M erhöhen.

In Fig.2 ist das Prinzip des synchronen/asynchronen Mikrotiterplattentransportes dargestellt.

Erkennbar sind zwei Module M1, M2 mit jeweils mehreren Laborgeräten C1, C2, C3, das sind beispielsweise die für das Handling mit Proben in Mikrotiterplatten erforderlichen Pipettierer, Reader und Inkubatoren.

An der Übergabestelle E1 für die Zufuhr der Mikrotiterplatten in eines der Module M1 oder M2 sowie der Übergabestelle E2 zur Ausfuhr der Mikrotiterplatten aus den Modulen M1, M2 stehen die Module M1, M2 mit einem zentralen Transportsystem TS (z.B. Förderband) in Kontakt, das den Transport zwischen den Modulen M1, M2, aber auch zwischen Eingabespeichereinheiten für die auszulesenden Mikrotiterplatten und Endspeichereinheiten für ausgelesene Mikrotiterplatten übernimmt.

Die Übergabe an den Einheiten E1, E2 kann beispielsweise über Schiebeeinheiten unter Anheben und Absenken der Mikrotiterplatten oder über Greifer erfolgen.

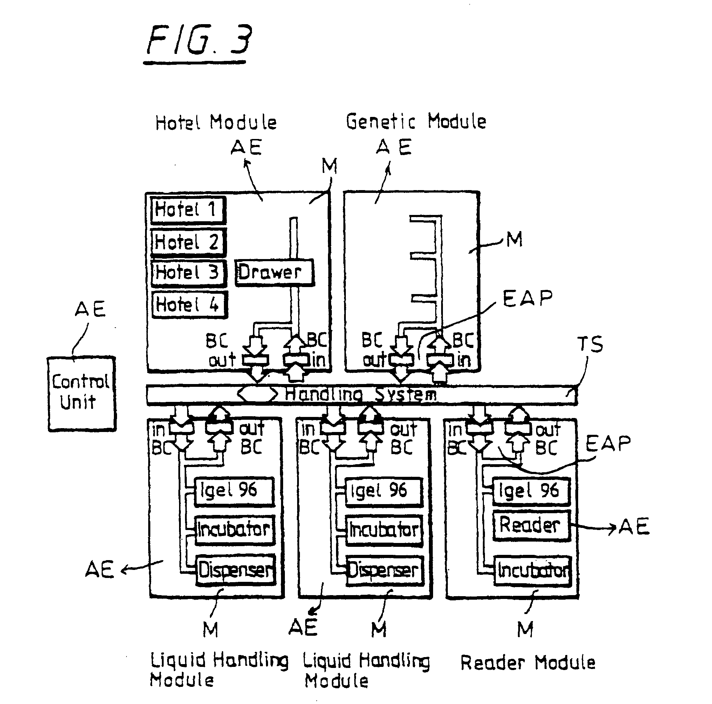

Fig.3 stellt das erfindungsgemäße Gesamtsystem dar, bestehend aus dem zentralen Transportsystem TS und Ein- und Ausführpuffern EAP zur Übernahme oder Übergabe von Mikrotiterplatten an/vom Transportsystem TS.

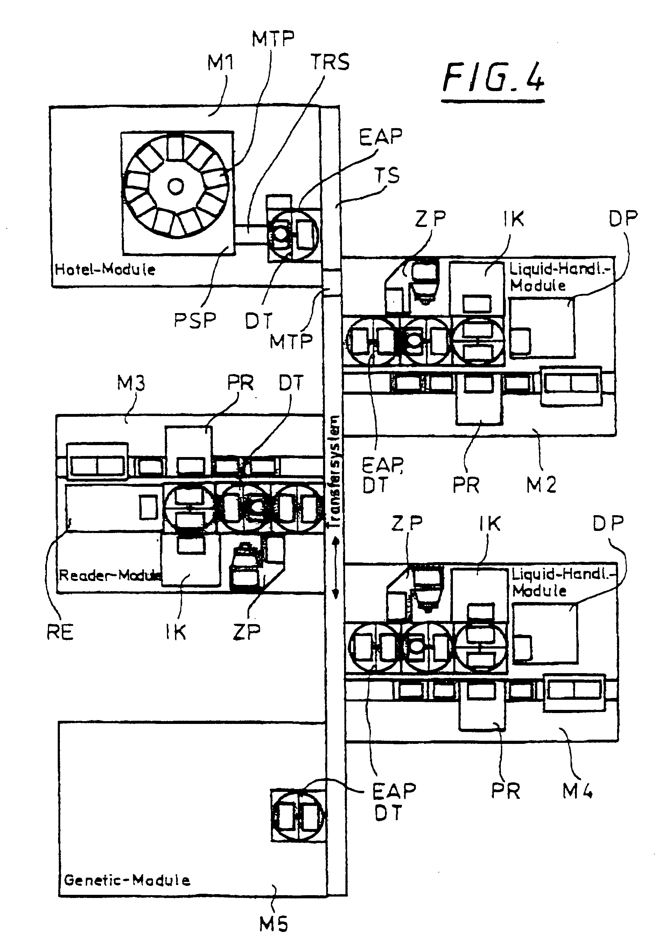

Eine detaillierte Darstellung zeigt Fig.4. Hier übernimmt ein Drehteller DT mit seinen zwei Plattenpositionen die Funktion des Ein- und Ausgabepuffers EAP. Über eine Stopp- und Schubvorrichtung (nicht dargestellt) wird eine Mikrotiterplatte MTP vom zentralen Transportsystem TS angehoben und auf dem Drehteller DT befördert.

Dieser dreht sich, und in der diametral gegenüberliegenden Stellung des Drehtellers DT wird die Mikrotiterplatte MTP von weiteren Drehtellern DT übernommen, über die auch die Zufuhr zu den Moduleinheiten M1,M2,M3,M4 vorgesehenen Inkubatoren IK, Dispensern DP und Pipettierrobotern PR erfolgt.

Auf der jeweils abgewandten Seite des Drehtellers DT kann gleichzeitig eine bereits bearbeitete Mikrotiterplatte MTP aufgeladen werden, die bei der Drehung des Drehtellers DT dann in Richtung des Modulausgangs oder eines Staplers ZP zum Stapeln der Mikrotiterplatten MTP transportiert werden kann.

Die Kollisionsfreiheit kann beispielsweise über einen Sensor gewährleistet werden, der erkennt, ob die jeweilige Seite des Drehtellers DT frei ist, so daß eine Mikrotiterplatte MTP zum Rücktransport aufgeladen werden kann.

Eine weitere denkbare Variante wäre ein getakteter Betrieb, so daß der Drehteller DT immer eine Mikrotiterplatte MTP einführt und eine andere Mikrotiterplatte MTP ausführt.

Bestandteil eines Moduls M kann auch der Reader RE zum optischen Auslesen der Mikrotiterplatten MTP sein, in Fig.4 beispielsweise dargestellt im Modul M3.

Die Auslesung mittels des Readers RE kann ein- oder mehrmals erfolgen, sowohl im Durchlicht oder auch im Auflicht, wobei Absorption, Fluoreszenz, Lumineszenz, Szintillation oder andere auftretende Effekte für die Einzelproben bestimmt werden können.

Die Erfassung der Fluoreszenz ist beispielsweise in der Veröffentlichung 1. zum Stand der Technik, Seiten 357 bis 365 beschrieben.

In den Modulen M1 bis M5 können zusätzliche Zwischenspeicher ZP für die Mikrotiterplatten MTP vorgesehen sein.

Beispielsweise kann auch über das Modul M2 die Probenvorbereitung erfolgen und im Modul M3 die Auslesung über einen optischen Reader RE.

In Modul M1 ist beispielhaft ein Plattenspeicher PSP vorgesehen, der über ein Transfersystem TRS und einen Drehteller DT mit dem Transportsystem TS in Verbindung steht. Modul M5 ist mit zusätzlichen Geräten bestückbar und über einen Drehteller DT mit dem Transportsystem TS verbunden.

## Patentansprüche

1. Transportsystem zum Transport und Handling von Mikrotiterplatten (MPT), vorzugsweise für den Einsatz im High Throughput Screening, umfassend
- mehrere Module mit Mitteln zur Probenvorbereitung und zum Auslesen der Proben in den Mikrotiterplatten (MPT),
**dadurch gekennzeichnet, daß**
- ein zentrales Transportsystem (TS) zum asynchronen Transfer der Mikrotiterplatten (MPT) zwischen den einzelnen Modulen (M) vorhanden ist, wobei
- Ein- und Ausgabepuffer (EAP) zur Übernahme der Mikrotiterplatten (MPT) von dem zentralen Transportsystem (TS) in die Module (M) bzw. zur Übergabe der Mikrotiterplatten (MPT) von den Modulen an das zentrale Transportsystem (TS) vorgesehen sind.

2. Transportsystem nach Anspruch 1, bei dem die Ein- und Ausgabepuffer (EAP) aus Drehtellern (DT) gebildet sind, die mehrere Haltepositionen für die Mikrotiterplatten (MPT) aufweisen.

3. Transportsystem nach einem der vorgenannten Ansprüche, bei dem mindestens eines der Module (M) mit einem Lokalrechner (PC) mit nach außen standardisierter Schnittstelle verbunden ist und mit einem Leitrechners (LR) über diese Schnittstellen der Transport und/oder die Verarbeitung und/oder die Bestückung und/oder das optische Auslesen gesteuert wird.

## Claims

1. A transport system for transport and handling microtitre plates (MPT), preferably for use in High Throughput Screening, including
- a plurality of modules with means for preparing samples and for reading the samples in the microtitre plates (MPT), **characterised in that** a central transport system (TS) is provided for the asynchronous transfer of the microtitre plates (MPT) between the individual modules (M), input and output buffers (EAP) being provided for accepting the microtitre plates (MPT) from the central transport system (TS) into the modules and for transferring the microtitre plates (MPT) from the modules to the central transport system (TS), respectively.

2. A transport system as claimed in Claim 1, in which the input and output buffers (EAP) are constituted by rotary tables, which have a plurality of support positions for the microtitre plates (MPT).

3. A transport system as claimed in one of the preceding claims, in which at least one of the modules (M) is connected to a local computer (PC) with an outwardly standardised interface and the transport and/or the processing and/or the insertion and/or the optical reading is controlled with a master computer (LR) via these interfaces.

## Revendications

1. Système de transport pour le transport et la manipulation de plaquettes de microtitrage (MPT), de préférence pour l'utilisation dans le High Throughtput Screening, comprenant
- plusieurs modules avec des moyens pour la préparation et le tri des échantillons dans les plaquettes de microtitrage (MPT),
**caractérisé en ce que**
- un système de transport (TS) central est présent pour le transfert asynchrone des plaquettes de microtitrage (MPT) entre les différents modules (M),
- des tampons d'entrée et de sortie (EAP) sont prévus pour le transfert des plaquettes de microtitrage (MPT) du système de transport (TS) central aux modules (M) et pour le transfert des plaquettes de microtitrage (MPT) des modules au système de transport (TS) central.

2. Système de transport selon la revendication 1, sur lequel les tampons d'entrée et de sortie (EAP) sont constitués de plateaux tournants (DT), qui présentent plusieurs positions de retenue pour les plaquettes de microtitrage.

3. Système de transport selon l'une quelconque des revendications précédentes, sur lequel au moins l'un des modules (M) est relié à un ordinateur local (PC) avec une interface standardisée à l'intérieur et le transport et/ou le traitement et/ou l'équipement et/ou le tri optique est/sont commandé(s) avec un ordinateur pilote (LR) au moyen de ces interfaces.
